(19)

Europäisches Patentamt
European Patent Office
Office européen des brevets

(11) Publication number: **0 534 024 B1**

(12) **EUROPEAN PATENT SPECIFICATION**

(45) Date of publication of patent specification: **19.04.95**

(51) Int. Cl.[6]: **A23F 5/16**, A23F 5/20, A23F 5/18

(21) Application number: **91310834.6**

(22) Date of filing: **25.11.91**

(54) **Decaffeinated coffee products with reduced potassium content.**

(30) Priority: **23.09.91 US 763854**

(43) Date of publication of application:
**31.03.93 Bulletin 93/13**

(45) Publication of the grant of the patent:
**19.04.95 Bulletin 95/16**

(84) Designated Contracting States:
**AT BE CH DE DK ES FR GB GR IT LI LU NL SE**

(56) References cited:
**EP-A- 0 049 497**
**EP-A- 0 397 344**

**PATENT ABSTRACTS OF JAPAN vol. 011, no. 043 (C-402)1987**

(73) Proprietor: **KRAFT GENERAL FOODS, INC.**
**250 North Street**
**White Plains**
**New York 10625 (US)**

(72) Inventor: **Chou, Dorothy T.**
**304 East 65th Street,**
**Apartment 31C**
**New York, New York 10021 (US)**
Inventor: **Strelevitz, Timothy J.**
**111 Lindsey Court**
**Franklin Park,**
**New Jersey 08823 (US)**
Inventor: **Ouijano, Marlene M.**
**183 Walnut Street**
**Northvale, New Jersey 07647 (US)**
Inventor: **Skiff, Ronald H.**
**28 Marlin Drive**
**Whippany, New Jersey 07981 (US)**
Inventor: **Hirsh, Kenneth R.**
**33 Scott Drive**
**Morganville,**
**New Jersey 07751 (US)**

(74) Representative: **Eyles, Christopher Thomas et al**
**W.P. THOMPSON & CO.**
**Celcon House**
**289-293 High Holborn**
**London WC1V 7HU (GB)**

EP 0 534 024 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Technical Field

The invention relates in general to coffee processing, and specifically to the production of a decaffeinated coffee product which will evoke a decreased gastric acid response after ingestion. The decaffeinated coffee product is processed to remove a majority of its normal content of potassium.

### Background Art

There has been speculation since the mid-1940's that coffee contains gastric acid secretagogues (stimulants of the production of digestive acid in the stomach) distinct from its caffeine content. That early research has been reconfirmed over the years by numerous investigators who showed that decaffeinated coffee substantially retains regular coffee's ability to increase the secretion of acid by the stomach.

Normal food intake leads to gastric acid secretion because of the action of only a few food constituents and the direct effect of stomach distention. Caffeine, coffee, calcium ions, alcohol and the digestion products of protein are commonly ingested food components known to clearly increase gastric acid output. The gastric acid secretagogue component of decaffeinated coffee has been the subject of speculation and debate throughout the scientific community.

Early attempts in the food art to produce a "stomach friendly" coffee, i.e., a coffee which will produce less or no heartburn in susceptible individuals, centered upon the deacidification of coffee such as by chemically neutralizing the acids present in coffee by the addition of a food-grade alkaline agent.

US-A-4160042 and US-A-4204004 teach a method of reducing the caffeine and/or chlorogenic acid content of coffee by treatment with particles of carob pods which absorb the caffeine and chlorogenic acid. US-A-4278696 teaches a process for deacidifying a coffee extract by contacting it with chitosan in divided form and recovering the resultant deacidified extract. This patent stresses the importance of the removal of chlorogenic acid since it is the predominant acid found in coffee. However, other acids including malic acid are also reduced by the treatment. Another process, described in US-A-4317841, teaches the reduction in the acidity of a coffee extract by electrodialysis. The non-cathodic extract is collected, contacted with subdivided chitosan and, after removal of the chitosan, is mixed with at least a part of cathodic extract to provide a deacidified coffee extract.

DE-A-3239219 teaches a process involving the contacting of an aqueous extract of green coffee beans with a polymer anion-exchange resin, this resin having been loaded by adsorption with at least one nonacidic coffee extract constituent in order to exchange the acids present in the aqueous extract to produce a reduced chlorogenic acid green coffee. The object of this invention is to produce a coffee product which would reduce irritation of stomach mucosa and not cause stomach acidity.

WO-A-87/04598 teaches a coffee product with an increased chlorogenic acid level which is said to improve the digestibility of coffee by reducing human acid secretion. The physiology studies reported in the patent application were performed on human male and female subjects. However, the poor methodology utilized in the studies including the lack of proper scientific controls renders the results questionable at best.

US-A-4976983 relates to the removal, from coffee having a relatively high malic acid content, of the majority of the malic acid while retaining a majority of its chlorogenic acid content, to produce a stomach friendly coffee.

EP-A-0397344 teaches that a decreased gastric acid response upon ingestion of coffee can be provided by removing a majority of the malic acid from the coffee.

JP-A-61209573, as disclosed by its PAJ abstract, discloses a potassium reduced beverage, such as coffee, for persons having renal impairment.

### Disclosure of the Invention

The invention relates to a method for decreasing the gastric acid response upon ingestion of a decaffeinated coffee beverage which comprises removing potassium from a decaffeinated coffee product to lower the potassium content of the product sufficiently to decrease the gastric acid response upon ingestion of the coffee product or, in the event that the coffee product is not a coffee beverage, upon the ingestion of a coffee beverage derived from the coffee product, and the invention also relates to a decaffeinated coffee product having less than half its normal potassium content, that is to say the potassium content of the decaffeinated coffee product without potassium removal treatment. Thus the invention provides a decaffeinated coffee produced by decaffeination of a conventional coffee, such as an Arabica or Robusta coffee, characterized in that the decaffeinated coffee product has been treated to reduce its potassium content to less than half the potassium content of the decaffeinated coffee product without such treatment and to a potassium content such that, when said decaffeinated coffee product is a coffee beverage or, in the event that the decaffeinated coffee product is not a coffee beverage, when a coffee beverage is derived from said decaffeinated coffee product, said potassium content is less than 50 mg per 160 ml cup.

## Detailed Description of Preferred Embodiment

Coffee products have a normal content of potassium typically on the order of 8 to 10% dry weight basis based on total coffee solids. In the present application, all percentages are on a dry weight basis unless otherwise indicated. For example, 150 ml of decaffeinated coffee beverage having 1% coffee solids based on the weight of the beverage and having a potassium content of 10%, dry weight basis, contains 0.15 grams of potassium.

Decaffeinated coffee products in accordance with the present invention have less than half of their normal potassium content, preferably less than 40%, and more preferably less than 25%. While the normal level of potassium in coffee products will vary somewhat, in general the potassium content in decaffeinated coffee products according to the present invention will be from essentially nil up to 4.5%, preferably up to 3.5%, and more preferably up to 2%.

In general, coffee products typically have a potassium (K) content which will be similar for whichever conventional coffee is chosen, such as Arabica or Robusta coffees. For green coffee beans, this is typically 1.6 - 2.0% K on a dry weight basis, and for roasted beans (assuming about 88% roasted yield) the potassium content is about 1.8 - 2.3% K on a dry weight basis. When a soluble coffee is prepared, the potassium content in the final product will vary with percent yield since potassium is easily soluble in aqueous solution. As yield increases, potassium content in the final soluble product will decrease. For example, in conventional production of soluble coffee, yields range from about 45%, which will produce soluble coffee having about 4.0 - 5.2% K on a dry weight basis, to 50% (product will have 3.6 - 4.0% K), to about 60%, which results in soluble coffee of about 3.0 - 3.8% K. With processes achieving even greater percentage yields of upwards of 70 and 80%, more of the potassium is naturally diluted with the other soluble coffee solids.

A typical decaffeinated soluble coffee product which does not undergo further potassium removal in accordance with the present invention will thus have a fairly large range of possible levels of potassium. This range is roughly from 50 to 100 mg K per cup of decaffeinated coffee beverage prepared from the decaffeinated soluble coffee products. By cup is meant a standard sized coffee cup that is 160 ml in volume. With processes achieving soluble coffee product yields of 70% or higher, however, the potassium content of soluble coffee can be even lower than 50 mg for a cup of coffee prepared therefrom.

In general, non-instant solid coffee products which must be brewed in order to prepare a coffee beverage typically contain anywhere from 6 to 9 percent potassium on a dry weight basis. The coffee beverages prepared from these coffee solids thus will generally contain an amount of potassium which will range from 60 to 120 mg per 160 ml cup. Still other coffee products, such as those products that are liquid in final form, can have potassium contents of up to about 160 mg K/160 ml cup. It is thus the case that coffee beverages prepared from any of the various forms of coffee available to the consumer will normally have a range of potassium of from 50 to 160 mg K/160 ml cup.

In accordance with the present invention, a decaffeinated coffee product is provided which has less than half of its normal potassium content, preferably less than 40%, and more preferably less than 25%, the potassium content of the decaffeinated coffee product being such that when the decaffeinated coffee product is a decaffeinated coffee beverage, or when a coffee beverage is prepared from the decaffeinated coffee product, that coffee beverage will have a potassium content of less than 50 mg per 160 ml cup. In a more preferred embodiment, the potassium content in the decaffeinated coffee beverage produced in accordance with the invention will be less than 25 mg per cup.

The caffeine content of the decaffeinated coffee product is not more than half, and is preferably less than 25%, of its normal caffeine content. More preferably, the caffeine content is less than 10% of its normal caffeine content, and still more preferably, the caffeine content is less than 3% of its normal caffeine content. The coffee product may be decaffeinated by any of several known processes, preferably decaffeination of green coffee solids by the use of supercritical carbon dioxide as disclosed in US-A-4820537, typically removing 95% and more of the normal caffeine content. The normal content of caffeine varies considerably among various types of coffee. For example, the normal caffeine content, on a dry weight basis, of green Robusta coffee is about 2.3% whereas the normal caffeine content of green Colombian coffee is about 1.2%. Similar dry weight amounts for caffeine in roast and ground coffee are about 2.6% for Robusta and 1.4% for Colombian. In soluble coffee, the normal content, again on a dry weight basis, is somewhat higher, on the order of about 4-6%, and in a coffee beverage, normal caffeine content is about 60 or 70 to 100 mg per six ounce (177.44 ml) cup.

The decaffeinated coffee products may have a low content of malic acid. Analysis of varieties of coffee to determine malic acid content has shown that Arabica coffees possess a significantly higher amount of malic acid than do Robusta coffees. A typical Robusta coffee contains from 0.12% of 0.36% malic acid on a dry weight basis while a typical Arabica coffee contains a significantly higher amount of from 0.38% to 0.67% malic acid on a dry weight basis. Therefore a 100% Robusta soluble coffee may contain a malic acid content of 0.11% to 0.33% malic acid on a dry weight basis, assuming a soluble extraction yield of approximately 50% commercially from the roast and ground coffee. A roasted and ground 100% Robusta coffee may contain a normal malic acid content of 0.05% to 0.2% malic acid on a dry weight basis depending on the degree of roast. Either of these two 100% Robusta coffee products will produce a coffee containing from 2.5 to 9.8 mg. malic acid per cup (for purposes of the present invention, a cup shall measure 160 ml) on an as-consumed basis.

In general, the malic acid content of decaffeinated coffee products in accordance with the present invention is preferably not more than 0.1%, more preferably not more than 0.085%, and still more preferably not more than 0.06% dry weight basis. As indicated above, some coffee products are inherently low in malic acid content whereas others are not. Where malic acid content is to be reduced, it is preferably reduced by methods disclosed in US-A-4976983. Malic acid is removed such that its content is preferably less than 50% of its normal content, and more preferably less than 25%. Decaffeinated coffee products in accordance with the invention include decaffeinated green coffee solids and extracts, decaffeinated roast and ground coffee solids and extracts and decaffeinated coffee products prepared therefrom such as liquid coffee concentrates, soluble coffee products, ready-to-drink coffee beverages, and the like. Removal of potassium can be effected from the product itself or from a precursor. Decaffeination is preferably effected prior to removal of potassium.

When the desired coffee product is green or roasted beans, either whole or ground, and when the potassium is removed directly from the product, the potassium is removed by extraction. When potassium is extracted from green coffee solids, the extraction solvent, preferably aqueous, is preferably a green extract lean with respect to the potassium, but rich with respect to the remaining extractable matter, in order to selectively remove potassium. Similarly, when potassium is extracted from roasted coffee beans or roast and ground coffee, the extraction solvent, again preferably aqueous, is a brown coffee extract lean with respect to potassium but rich with respect to the remaining extractable matter. The green or roasted coffee products, thus having a reduced potassium content, are then processed in the usual way, each coffee product subsequently produced having a reduced potassium content. Thus, decaffeinated green coffee beans having a reduced potassium content, and optionally also demalated, may be roasted to provide a roasted decaffeinated coffee bean product having a reduced potassium content. These roasted beans may be ground to provide a decaffeinated roast and ground coffee product of reduced potassium content. Brown extracts of the roasted coffee solids may be prepared and these brown extract products, which also have a reduced potassium content, may be sold as such or further processed, such as by spray drying, freeze drying, to provide decaffeinated soluble coffee products having a reduced potassium content.

Where potassium is removed from a liquid coffee product, such as a green or brown extract, the extract product is preferably aqueous and potassium is preferably removed by ion exchange, or membrane separation. In membrane separation, the extract is preferably pre-treated to remove foulants such as chlorogenic acid and sugars. These ingredients can be reintroduced into the extract, if desired, after removal of potassium. Electrodialysis is a preferred membrane separation method for removing potassium. These techniques of potassium removal are also useful in connection with the use of a potassium-lean green or brown coffee extract for extracting potassium from green or brown coffee solids as described above. After extracting potassium from coffee solids, the previously potassium-lean extraction solvent becomes enriched with respect to potassium. Potassium is then selectively removed from the extraction solvent by ion exchange, membrane separation, or the like, and the extraction solvent, thus again depleted in potassium, can be again used to remove potassium from coffee solids.

The following examples are presented only for illustration of the present invention and are not intended to limit its scope in any way:

Example

A randomized, double-blind, 3-way crossover study was conducted in 41 healthy men. Each subject was given three decaffeinated coffee beverages prepared from three types of instant coffee denoted A, B, and C.

Coffee A was prepared from soluble coffee prepared from a commercially decaffeinated Mexican Arabica coffee using supercritical carbon dioxide. After decaffeination, the moist green coffee was dried to a moisture level of about 11%. The green coffee beans were roasted in a conventional manner, ground, brewed with water at 210°F to a roast yield of about 15-20%, and freeze dried.

Coffee B was prepared by first removing malic acid from a portion of the decaffeinated green beans that were used to prepare Coffee A. Water was used to contact the decaffeinated green coffee beans to produce an aqueous green coffee extract. The green coffee extract was then filtered to remove any insoluble matter and then sterilized in sterilizing filters. The filtered extract is sterile and free of microorganisms. The filtered extract is fed directly to a fermentor. To the fermentor is added a green coffee extract which contains about 5 x $10^9$ colony forming units of Lactobacillus plantarum per ml. After sufficient time has elapsed for the Lactobacillus plantarum to catabolize the malic acid to lactic acid and $CO_2$, the malic acid lean green coffee extract is filtered to recover essentially all the Lactobacillus plantarum cells, heated to a temperature of about 160°F - 180°F (71.1°C - 82.2°C), and passed over green coffee beans to effect the removal of malic acid from the green coffee. Following extraction, the demalated green coffee was then dried, roasted, ground and brewed similarly as Coffee A and then spray dried.

Coffee C was prepared by rehydrating Coffee B to a 5% solids content, and then removing potassium by ion exchange. The coffee extract was contacted with Dow Chemical's Dowex HCR-S-Na ion exchange resin to remove potassium in exchange for sodium. A 0.3% dry coffee solids to dry ion exchange resin solids ratio was used in an agitated vessel at 100°F (37.8°C) temperature for 1.25 hours duration. The extract was then filtered to remove the resin, and spray dried.

Analysis of the three instant coffees was as follows:

| | Coffee A (Wt%, dry basis) | Coffee B (Wt%, dry basis) | Coffee C (Wt%, dry basis) |
|---|---|---|---|
| moisture | 3.3 | 2.4 | 4.8 |
| caffeine | 0.18 | 0.17 | 0.11 |
| potassium | 8.72 | 7.31 | 0.765 |
| malic acid | 1.76 | 0.10 | 0.11 |
| sodium | 0.23 | 0.12 | 6.24 |

Coffee beverages (A), (B), and (C) were prepared by dissolving 3.5 grams, respectively, of Coffees A, B, and C in 150 ml of water at 37°C.

The test procedure was as follows:

On at least three occasions, each separated by at least six days, subjects fasted for a minimum of twelve hours. On each study morning, subjects were intubated with a nasogastric tube, the position of which was verified under fluoroscopy. The entire contents of the stomach were aspirated followed by administration and immediate aspiration of 15 ml of ambient temperature water. Subjects were then allowed to equilibrate for 30 minutes before beginning the first portion of the study. After equilibration, subjects were dosed three times at 10 minute intervals with 150 mls of water at 37°C. Each water dosing was removed from the stomach before the next one was introduced.

After the three 150 ml water administrations, subjects were dosed twice (at 15-minute intervals) with test beverage. The contents of the stomach were aspirated every fifteen minutes for the first hour after the first test administration and half-hourly for the next hour. After the last collection was made, the nasogastric tube was removed. All aspirates were analyzed for pH, acid concentrations and volume. Acid concentrations were multiplied by the corresponding volume to yield titratable acidity, measured in mEq.

The titratable acidity determined after the third administration of 150 ml of water is used as a "base line" response for each subject to the administration of the 150 ml of water contained in each of the coffee beverages. This base line value is subtracted from the titratable acidity to give a titratable acidity value attributable to the coffee content of the test beverages. Mean titratable acidity (after correction for the base line response) for all of the subjects of the test is given in Table I.

TABLE I

MEAN TITRATABLE ACIDITY (mEq) IN EACH COLLECTION INTERVAL (CORRECTED FOR THE 3RD WATER ADMINISTRATION)

| | Hours (post-dose) | | | | | |
|---|---|---|---|---|---|---|
| | 0.25 | 0.50 | 0.75 | 1.00 | 1.50 | 2.00 |
| Decaffeinated Coffee (A) | 3.0476 | 3.9776 | 2.0302 | 1.3977 | 1.2646 | 0.9552 |
| Decaffeinated/Demalated Coffee (B) | 3.0987 | 3.8059 | 2.2248 | 1.2312 | 1.3953 | 1.2058 |
| Decaffeinated/Demalated/ Potassium Reduced Coffee (C) | 2.7425 | 2.9893 | 1.4967 | 1.1070 | 0.5878 | 1.2397 |
| <u>Ratio of Means:</u> | | | | | | |
| B/A | 1.02 | 0.96 | 1.10 | 0.88 | 1.10 | 1.26 |
| C/A | 0.90 | 0.75 | 0.74 | 0.79 | 0.46 | 1.30 |
| B/C | 1.13 | 1.27 | 1.49 | 1.11 | 2.37 | 0.97 |
| <u>p-Value</u> | | | | | | |
| A vs B | 0.7332 | 0.[illegible]889 | 0.8800 | 0.6367 | 0.4329 | 0.1253 |
| A vs C | 0.4897 | 0.0053 | 0.0244 | 0.2481 | 0.0219 | 0.2750 |
| B vs C | 0.3051 | 0.0248 | 0.0170 | 0.4391 | 0.0035 | 0.8281 |

No statistically significant differences (no p values less than 0.05) were detected between coffee beverages (A) and (B). Statistically significant differences (p values less than 0.05) were detected between coffee beverages (A) and (C) at 0.50 and 0.75 hours and between coffee beverages (B) and (C) at 0.5, 0.75 and 1.50 hours. At all time points, coffee beverage (B) produced more titratable acidity than coffee beverage (C).

By removing the "base line" titratable acidity (3rd water administration), the net amount of titratable acidity produced in the stomach which can be attributed solely to the effects of the coffee content of the beverages can be determined. For all three beverages, the mean peak titratable acidity occurred at 0.5 hours post-dose. As was the case for the uncorrected titratable acidity, beverage (C) produced significantly less acidity than beverages (A) and (B).

Comparison Example

A randomized, double-blind, 3-way crossover study like that of the foregoing Example was conducted in 41 healthy adult males. Each subject was given three regular (i.e. non-decaffeinated) coffee beverages prepared from three types of instant coffee denoted 1, 2 and 3.

Coffee 1 was prepared from Colombian coffee in the same manner as Coffee A in the foregoing Example, except that the coffee was spray dried.

Coffee 2 was prepared by first removing malic acid from a portion of the green coffee beans used to prepare Coffee 1. Water was used to contact the green Colombian coffee beans to produce an aqueous green coffee extract. The green coffee extract was then sterilized in sterilizing filters. The extract leaving the final filter is sterile and free of microorganisms. The extract is fed directly to a bioreactor through a conduit that has been steam sterilized.

The bioreactor consists of a spiral wound PVC silica embedded biosupport, to which the organism Lactobacillus plantarum has attached itself in numbers approximately $10^{11}$ cells per ml. of green coffee extract throughput. The residence time of the green extract within the biosupport was sufficient to reduce the malic acid level by approximately 75%. The malic acid lean green extract drawn from the biosupport was then heated to a temperature of about 160°F - 180°F (71.1°C - 82.2°C) and passed over the green coffee. Following extraction, the demalated green coffee was then washed of surface solids, roasted, ground and brewed prior to spray drying as with Coffee 1.

Coffee 3 was prepared by rehydrating Coffee 2 to a 5% solids level and contacting it with an ion exchange resin (Dowex HCR-S-Na) to remove potassium in exchange for sodium as in the foregoing Example.

Analysis of the three instant coffees was as follows:

| | Coffee 1 (Wt%, dry basis) | Coffee 2 (Wt%, dry basis) | Coffee 3 (Wt%, dry basis) |
|---|---|---|---|
| moisture | 4.23 | 4.34 | 2.94 |
| caffeine | 5.93 | 4.84 | 4.52 |
| potassium | 8.92 | 9.88 | 0.86 |
| malic acid | 1.305 | 0.236 | 0.283 |
| sodium | 0.03 | 0.04 | 5.45 |

Coffee beverages (1), (2), and (3) were prepared by dissolving 3.5 grams, respectively, of Coffees 1, 2, and 3 in 150 ml of water at 37°C.

The subjects were tested in the same manner as in the foregoing Example. Mean titratable acidity of coffee beverages (1), (2) and (3) was as shown in Table II.

Table II

| Peak Mean Titratable Acidity Non-Decaffeinated Coffee | | | |
|---|---|---|---|
| | Coffee 1 Non-decaf feinated (mEq) | Coffee 2 Non-decaf feinated De-malated (mEq) | Coffee 3 Non-decaffeinated De-malated Potassium Reduced (mEq) |
| Total | 5.42 | 5.74 | 5.54 |
| Total less base line | 4.52 | 4.57 | 4.45 |

There is no significant difference (no p value < 0.05) in mean peak titratable acidity between any of Coffees (1), (2) and (3).

**Claims**

**1.** A decaffeinated coffee product produced by decaffeination of a conventional coffee, such as an Arabica or Robusta coffee, characterized in that the decaffeinated coffee product has been treated to reduce its potassium content to less than half the potassium content of the decaffeinated coffee product without such treatment and to a potassium content such that, when said decaffeinated coffee product is a coffee beverage or, in the event that the decaffeinated coffee product is not a coffee beverage, when a coffee beverage is derived from said decaffeinated coffee product, said potassium content is less than 50 mg per 160 ml cup.

2. A decaffeinated coffee product according to claim 1, characterized in that the decaffeinated coffee product has been treated to reduce its potassium content to less than 40% of the potassium content of the decaffeinated coffee product without such treatment.

3. A decaffeinated coffee product according to claim 1 or claim 2, characterized in that the decaffeinated coffee product has been treated to reduce its potassium content to less than 25% of the potassium content of the decaffeinated coffee product prior to such treatment and to a potassium content such that, when said decaffeinated coffee product is a coffee beverage or, in the event that the decaffeinated coffee product is not a coffee beverage, when a coffee beverage is derived from said decaffeinated coffee product, said potassium content is less than 25 mg per 160 ml cup.

4. A decaffeinated coffee product according to any one of claims 1 to 3, characterized in that it is a green decaffeinated coffee bean product.

5. A decaffeinated coffee product according to any one of claims 1 to 3, characterized in that it is a roasted decaffeinated coffee solids product.

6. A decaffeinated coffee product according to any one of claims 1 to 3, characterized in that it is a green decaffeinated coffee extract.

7. A decaffeinated coffee product according to any one of claims 1 to 3, characterized in that it is a brown decaffeinated coffee extract.

8. A decaffeinated coffee product according to any one of claims 1 to 3, characterized in that it is a decaffeinated soluble coffee product.

9. A decaffeinated coffee product according to any one of claims 1 to 8, characterized in that it has a malic acid content of not more than 0.1% by weight based on the weight of coffee solids.

10. A decaffeinated coffee product according to claim 9, characterized in that the malic acid content is not more than 0.085% by weight based on the weight of coffee solids.

11. A decaffeinated coffee product according to any one of claims 1 to 10, characterized in that it has less than 25% of its normal content of caffeine.

12. A decaffeinated coffee product according to claim 11, characterized in that it has less than 10% of its normal content of caffeine.

13. A method of obtaining a decaffeinated coffee product according to claim 1, in which the decaffeinated coffee product comprises decaffeinated coffee solids and in which the potassium content of the coffee product is lowered by contacting the decaffeinated coffee solids with a potassium-lean extract of said coffee solids to selectively extract potassium from said coffee solids.

14. A method according to claim 13, wherein said decaffeinated coffee solids comprise decaffeinated green coffee beans.

15. A method of obtaining a decaffeinated product according to claim 1, in which the decaffeinated coffee product comprises a decaffeinated aqueous coffee extract and in which the potassium content of the coffee product is lowered by ion exchange.

16. A method of obtaining a decaffeinated product according to claim 1, in which the decaffeinated coffee product comprises a decaffeinated aqueous coffee extract and in which the potassium content of the coffee product is lowered by membrane separation.

17. A method of obtaining a decaffeinated product according to claim 1, in which the decaffeinated coffee product comprises a decaffeinated aqueous coffee extract and in which the potassium content of the coffee product is lowered by electrodialysis.

18. A method according to any one of claims 15 to 17, wherein said extract comprises an extract of green coffee solids.

19. A method according to any one of claims 15 to 17, wherein said extract comprises an extract of roast and ground coffee.

20. A method according to any one of claims 15 to 19, wherein said extract comprises a coffee beverage.

**Patentansprüche**

1. Entcoffeiniertes Kaffeeprodukt, hergestellt durch Entcoffeinieren von herkömmlichem Kaffee wie Arabica- oder Robusta-Kaffee, dadurch **gekennzeichnet,** daß das entcoffeinierte Kaffeeprodukt so behandelt wurde, daß dessen Kalium-Gehalt auf weniger als die Hälfte des Kalium-Gehaltes des entcoffeinierten Kaffeeprodukts ohne eine solche Behandlung reduziert wird und daß der Kalium-Gehalt so ist, daß, wenn das entcoffeinierte Kaffeeprodukt ein Kaffeegetränk ist, oder falls das entcoffeinierte Kaffeeprodukt kein Kaffeegetränk ist, wenn ein Kaffeegetränk aus dem entcoffeinierten Kaffeeprodukt gewonnen wird, der Kalium-Gehalt weniger als 50 mg pro 160 ml Tasse beträgt.

2. Entcoffeiniertes Kaffeeprodukt gemäß Anspruch 1, dadurch **gekennzeichnet,** daß das entcoffeinierte Kaffeeprodukt so behandelt wurde, daß dessen Kalium-Gehalt auf weniger als 40 % des Kalium-Gehaltes des entcoffeinierten Kaffeeprodukts ohne eine solche Behandlung reduziert wird.

3. Entcoffeiniertes Kaffeeprodukt gemäß Anspruch 1 oder Anspruch 2, dadurch **gekennzeichnet,** daß das entcoffeinierte Kaffeeprodukt so behandelt wurde, daß dessen Kalium-Gehalt weniger als 25 % des Kalium-Gehaltes des entcoffeinierten Kaffeeprodukts vor einer solchen Behandlung reduziert wird und daß der Kalium-Gehalt so ist, daß wenn das entcoffeinierte Kaffeeprodukt ein Kaffeegetränk ist oder falls das entcoffeinierte Kaffeeprodukt kein Kaffeegetränk ist, wenn ein Kaffeegetränk aus dem entcoffeinierten Kaffeeprodukt gewonnen wird, der Kalium-Gehalt weniger als 25 mg pro 160 ml Tasse beträgt.

4. Entcoffeiniertes Kaffeeprodukt gemäß einem der Ansprüche 1 bis 3, dadurch **gekennzeichnet,** daß es ein entcoffeiniertes Rohbohnenprodukt ist (green decaffeinated coffee bean product).

5. Entcoffeiniertes Kaffeeprodukt gemäß einem der Ansprüche 1 bis 3, dadurch **gekennzeichnet,** daß es ein festes, entcoffeiniertes, geröstetes Kaffeeprodukt ist (roasted decaffeinated coffee solids product).

6. Entcoffeiniertes Kaffeeprodukt gemäß einem der Ansprüche 1 bis 3, dadurch **gekennzeichnet,** daß es ein entcoffeinierter Rohkaffee-Extrakt ist.

7. Entcoffeiniertes Kaffeeprodukt gemäß einem der Ansprüche 1 bis 3, dadurch **gekennzeichnet,** daß es ein entcoffeinierter brauner Kaffee-Extrakt ist.

8. Entcoffeiniertes Kaffeeprodukt gemäß einem der Ansprüche 1 bis 3, dadurch **gekennzeichnet,** daß es ein entcoffeiniertes lösliches Kaffeeprodukt ist.

9. Entcoffeiniertes Kaffeeprodukt gemäß einem der Ansprüche 1 bis 8, dadurch **gekennzeichnet,** daß es einen Äpfelsäure-Gehalt von nicht mehr als 0,1 Gew.% bezogen auf das Gewicht der festen Kaffeebestandteile, hat.

10. Entcoffeiniertes Kaffeeprodukt gemäß Anspruch 9, dadurch **gekennzeichnet,** daß der Äpfelsäure-Gehalt nicht mehr als 0,085 Gew.%, bezogen auf die festen Kaffeebestandteile, beträgt.

11. Entcoffeiniertes Kaffeeprodukt gemäß einem der Ansprüche 1 bis 10, dadurch **gekennzeichnet,** daß es weniger als 25 % des normalen Coffein-Gehaltes hat.

12. Entcoffeiniertes Kaffeeprodukt gemäß Anspruch 11, dadurch **gekennzeichnet,** daß es weniger als 10 % des normalen Coffein-Gehaltes hat.

13. Verfahren zur Herstellung eines entcoffeinierten Kaffeeprodukts gemäß Anspruch 1, bei welchem das entcoffeinierte Kaffeeprodukt entcoffeinierte feste Kaffeebestandteile umfaßt und bei dem Kalium-Gehalt des Kaffeeprodukts dadurch abgesenkt wird, daß die entcoffeinierten festen Kaffeebestandteile mit einem kaliumarmen Extrakt dieser festen Kaffeebestandteile kontaktiert wird, um aus den festen Kaffeebestandteilen selektiv Kalium zu extrahieren.

14. Verfahren gemäß Anspruch 13, bei dem die entcoffeinierten festen Kaffeebestandteile entcoffeinierte rohe Kaffeebohnen umfassen.

15. Verfahren zur Herstellung eines entcoffeinierten Kaffeeprodukts gemäß Anspruch 1, in dem das entcoffeinierte Kaffeeprodukt einen entcoffeinierten wäßrigen Kaffee-Extrakt umfaßt und bei dem der Kalium-Gehalt des Kaffeeprodukts durch Ionenaustausch vermindert wird.

16. Verfahren zur Herstellung eines entcoffeinierten Kaffeeprodukts gemäß Anspruch 1, in dem das entcoffeinierte Kaffeeprodukt einen entcoffeinierten wäßrigen Kaffee-Extrakt umfaßt und bei dem der Kalium-Gehalt des Kaffeeprodukts durch Membranfiltration vermindert wird.

17. Verfahren zur Herstellung eines entcoffeinierten Kaffeeprodukts gemäß Anspruch 1, bei dem das entcoffeinierte Kaffeeprodukt einen entcoffeinierten wäßrigen Kaffee-Extrakt umfaßt und bei dem der Kalium-Gehalt des Kaffeeprodukts durch Elektrodialyse vermindert wird.

18. Verfahren gemäß einem der Ansprüche 15 bis 17, bei dem der Extrakt einen Extrakt fester Rohkaffeebestandteile umfaßt.

19. Verfahren gemäß einem der Ansprüche 15 bis 17, bei dem der Extrakt einen Extrakt gerösteten und gemahlenen Kaffees umfaßt.

20. Verfahren gemäß einem der Ansprüche 15 bis 19, bei dem der Extrakt ein Kaffeegetränk umfaßt.

**Revendications**

1. Produit de café décaféiné fabriqué par décaféination d'un café classique, tel qu'un café Arabica ou Robusta, caractérisé en ce que le produit de café décaféiné a été traité pour réduire sa teneur en potassium à moins de la moitié de la teneur en potassium du produit de café décaféiné n'ayant pas subi un tel traitement, et à une teneur en potassium telle que, lorsque ledit produit de café décaféiné est une boisson de café ou, dans l'éventualité où le produit de café décaféiné n'est pas une boisson de café, quand une boisson de café est obtenue à partir dudit produit de café décaféiné, ladite teneur en potassium est inférieure à 50 mg par tasse de 160 ml.

2. Produit de café décaféiné selon la revendication 1, caractérisé en ce que le produit de café décaféiné a été traité pour réduire sa teneur en potassium à moins de 40 % de la teneur en potassium du produit de café décaféiné n'ayant pas subi un tel traitement.

3. Produit de café décaféiné selon la revendication 1 ou la revendication 2, caractérisé en ce que le produit de café décaféiné a été traité pour réduire sa teneur en potassium à moins de 25 % de la teneur en potassium du produit de café décaféiné avant ce traitement, et à une teneur en potassium telle que, lorsque ledit produit de café décaféiné est une boisson de café ou, dans l'éventualité où le produit de café décaféiné n'est pas une boisson de café, quand une boisson de café est obtenue à partir dudit produit de café décaféiné, ladite teneur en potassium est inférieure à 25 mg par tasse de 160 ml.

4. Produit de café décaféiné selon l'une quelconque des revendications 1 à 3, caractérisé en ce que c'est un produit de grain de café décaféiné vert.

5. Produit de café décaféiné selon l'une quelconque des revendications 1 à 3, caractérisé en ce que c'est un produit de solides de café décaféiné torréfiés.

6. Produit de café décaféiné selon l'une quelconque des revendications 1 à 3, caractérisé en ce que c'est un extrait de café décaféiné vert.

7. Produit de café décaféiné selon l'une quelconque des revendications 1 à 3, caractérisé en ce que c'est un extrait de café décaféiné brun.

8. Produit de café décaféiné selon l'une quelconque des revendications 1 à 3, caractérisé en ce que c'est un produit de café soluble décaféiné.

9. Produit de café décaféiné selon l'une quelconque des revendications 1 à 8, caractérisé en ce qu'il a une teneur en acide malique inférieure à 0,1 % en poids sur la base du poids des solides du café.

10. Produit de café décaféiné selon la revendication 9, caractérisé en ce que la teneur en acide malique est inférieure à 0,085 % en poids sur la base du poids des solides du café.

11. Produit de café décaféiné selon l'une quelconque des revendications 1 à 10, caractérisé en ce qu'il a une teneur en caféine inférieure à 25 % de sa teneur normale en caféine.

12. Produit de café décaféiné selon la revendication 11, caractérisé en ce qu'il a une teneur en caféine inférieure à 10 % de sa teneur normale en caféine.

13. Procédé d'obtention d'un produit de café décaféiné selon la revendication 1, dans lequel le produit de café décaféiné est constitué par des solides de café décaféiné et dans lequel la teneur en potassium du produit de café est abaissée en mettant en contact les solides de café décaféiné avec un extrait pauvre en potassium desdits solides de café pour extraire, de manière sélective, le potassium desdits solides de café.

14. Procédé selon la revendication 13, dans lequel lesdits solides de café décaféiné sont constitués par des grains de café vert décaféiné.

15. Procédé d'obtention d'un produit décaféiné selon la revendication 1, dans lequel le produit de café décaféiné est constitué par un extrait de café aqueux décaféiné et dans lequel la teneur en potassium du produit de café est abaissée par un procédé d'échange d'ions.

16. Procédé d'obtention d'un produit décaféiné selon la revendication 1, dans lequel le produit de café décaféiné est constitué par un extrait de café aqueux décaféiné et dans lequel la teneur en potassium du produit de café est abaissée par un procédé de séparation à membrane.

17. Procédé d'obtention d'un produit décaféiné selon la revendication 1, dans lequel le produit de café décaféiné est constitué par un extrait de café aqueux décaféiné et dans lequel la teneur en potassium du produit de café est abaissée par un procédé d'électrodialyse.

18. Procédé selon l'une quelconque des revendications 15 à 17, dans lequel ledit extrait est constitué par un extrait de solides de café vert.

19. Procédé selon l'une quelconque des revendications 15 à 17, dans lequel ledit extrait est constitué par un extrait de café torréfié et moulu.

20. Procédé selon l'une quelconque des revendications 15 à 19, dans lequel ledit extrait est constitué par une boisson de café.